Europäisches Patentamt

European Patent Office

Office européen des brevets

(11) Publication number: **0 501 506 A2**

# EUROPEAN PATENT APPLICATION

(21) Application number: **92103449.2**

(22) Date of filing: **28.02.92**

(51) Int. Cl.5: **F16C 19/18**, F16C 33/60, B60B 27/00

(30) Priority: **01.03.91**

(43) Date of publication of application:
**02.09.92 Bulletin 92/36**

(84) Designated Contracting States:
**DE ES FR GB**

(71) Applicant: **SKF INDUSTRIE S.P.A.**
**Corso Vittorio Emanuele II No. 48**
**I-10123 Torino(IT)**

(72) Inventor: **Bertetti, Paolo**
**Lungo Po Antonelli, 163**
**I-10153 Torino(IT)**
Inventor: **Vignotto, Angelo**
**Via Montevideo, 6**
**I-10100 Torino(IT)**

(74) Representative: **Plebani, Rinaldo et al**
**c/o Studio Torta, Via Viotti 9**
**I-10121 Torino(IT)**

(54) A support unit for an idle element, in particular a non-driving wheel of a vehicle.

(57) A support unit is described for a non-driving wheel of a vehicle, comprising a first support element carried freely rotatably within a second support element by the interposition of a plurality of rolling bodies which are grouped in a first ring in angular contact with a first pair of opposed tracks formed externally on the first support element and internally on the second support element respectively, and a second ring cooperating with a second pair of opposed tracks formed externally on an annular element fitted externally onto the first support element and internally on the second support element; the annular element is maintained in cooperation with the rolling bodies of the second ring by respective cotters housed in an annular groove formed externally on the first support element and locked in this by a retaining ring fixed exclusively to the said annular element.

Fig.2

The present invention relates to a support unit for any idle mechanical element, and in particular, to a twin flanged integrated support wheel for a non-driving wheel of a vehicle.

Support units of the above mentioned type are normally constituted by a tapered (oblique) rolling element bearing having two rings of balls the inner and outer rings of which are provided, on opposite sides, with attachment flanges by means of which, on the one side it is fixed to the support unit of the vehicle suspension, and on the other side the wheel is fixed to the unit; in the case of idle wheels (non-driving) the inner ring of the bearing is replaced by a solid cylindrical element or stub axle. In each case, for the purpose of being able to arrange a large number of rolling bodies between the two elements of the bearing (so as to be able to support high loads in a small space), the stub axle is made in two parts on each of which is formed a respective track; in particular an inner track for a first of the rings of balls is formed on the spindle itself and another track, for the second ring is formed on a ring fitted to the stub axle: currently this ring is loosely mounted (or rather fitted with a small clearance), in such a way as to allow the adjustment of clearances between tracks and rolling bodies during assembly. According to UK Patent No 1570849, this ring is retained in position by cotters (or rather by a plurality of segments of a ring having a conical external lateral surface), which are fixed in a groove in the stub axle by a retaining ring fixedly secured to the stub axle itself.

The arrangement described in the above cited UK Patent is not, however, entirely free from disadvantages. In particular, either because of the clearance which is maintained between the ring forming the inner track and the stub axle for the purpose of then being able to adjust the clearances between track and rolling bodies, or (with the hypothetical possibility that it would be possible to leave out of consideration from the problem the ball-clearances adjustment and it would consequently be possible to mount this ring forcedly on the stub axle) because of the clearance which inevitably develops in use because of wear, relative rotation occurs between this ring and the cotters which causes premature wear of these elements.

The object of the invention is that of providing a support unit for an idle element, such as, for example, a non-driving wheel of a vehicle, which will be free from the disadvantages described whilst, at the same time, being able to allow adjustment of the clearances to be effected, and which will result in optimum use being made of the space available for the rolling bodies.

The said object is achieved by the invention, which relates to a support unit for an idle element, in particular a non-driving wheel of a vehicle, of the type comprising first and second support elements mounted coaxially and relatively rotatably; first and second rings of rolling bodies interposed between the first and second support elements; a pair of opposed first annular tracks in angular contact with the said first ring of rolling bodies and formed, respectively, externally on the first support element and internally on the second support element; an annular element fitted over the first support element; a pair of opposed second annular tracks in angular contact with the said second ring of rolling bodies and formed, respectively, externally on the said annular element and internally on the second support element; respective cotters engaged in an annular groove formed externally on the first support element and engaged by the said annular element to retain it in cooperation with the said second ring of rolling bodies; and a retaining ring adapted to retain the cotters engaged in the said annular groove of the first support element; characterised by the fact that the said retaining ring is fixed exclusively to the said annular element.

For a better understanding of the invention a nonlimitative description of an embodiment is given with reference to the attached drawing, in which:

Figure 1 is a frontal view of a support unit according to the invention, cut in half for simplicity in that it is symmetrical; and

Figure 2 illustrates the support unit of Figure 1 in section taken on the line II-II of Figure 1.

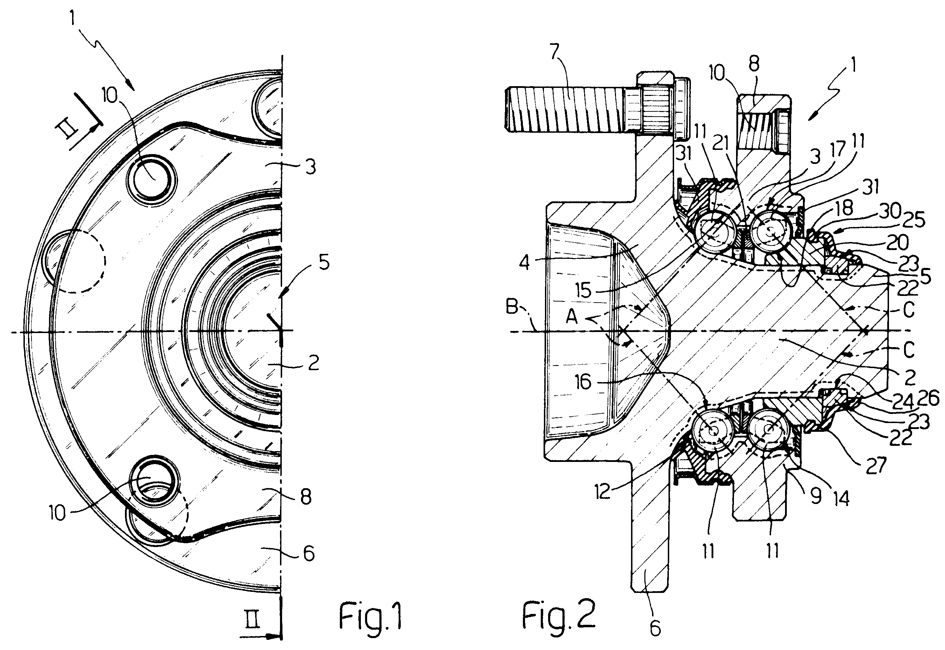

With reference to Figures 1 and 2, the reference numeral 1 generally indicates a support unit for any idle mechanical element, in the specific example a non-driving wheel of a vehicle, known and not illustrated for simplicity, or else, for example, a pulley. The unit 1 essentially comprises a first, radially inner support element, defined by a substantially cylindrical stub axle 2, and a second, radially outer support element, defined by a cylindrical ring 3 mounted coaxially of the element 2 and relatively rotatably with respect thereto: the element or stub axle 2 has two opposite ends 4, 5 on the first of which it is integrally formed with a flange 6; on this flange 6, for example by means of screws 7, is mounted, in a known way, the said idle element to be supported, such element being known and not illustrated for simplicity, for example, the said non-driving wheel of a vehicle; the element, or outer ring 3 is in turn provided with a similar flange 8 integrally formed with the outer ring 3 on an end 9 thereof opposite the end 4. By means of this flange 8 the unit 1 can be fixed in a known way (for example by threaded holes 10) to a support structure therefor, in the specific embodiment, for example, to a mounting of a vehicle wheel suspension, not illustrated, or else, for example if the flange 6 is intended to support a pulley, a known support structure.

The outer ring 3 is freely rotatable mounted on the stub axle 2 which passes therethrough with the interposition between them of a plurality of rolling bodies, in the specific example balls 11. These are arranged in two spaced groups or rings 12, 14 of adjacent rolling bodies, in angular contact with the elements 2, 3, with the ring 12 cooperating with a pair of opposed annular tracks 15, 16 and the ring 14 cooperating with a pair of opposed annular tracks 17, 18. In the specific example the tracks 15, 16 are nearer the end 4 and are axially offset in such a way that the radial contact axes, indicated A, between these and the balls 11, along which, in use, the thrust is transmitted between the elements 2 and 3, are inclined towards the axis of symmetry and rotation of the stub axle 2, indicated B, and converge towards the end 4; similarly the tracks 17, 18 are specularly disposed with respect to the tracks 15, 16, nearer the end 5 and axially offset in such a way that the radial contact axes C between these and the balls 11, are inclined towards the axis B and converge towards the end 5: in substance, the assembly of elements 2, 3, 11 and the associated tracks 15, 16, 17, 18 defines a known angular contact rolling element bearing having two rings of balls.

The end 5 of the stub axle 2 projects through the outer ring 3 beyond the extremity 9 of this latter; the tracks 15, 16 are formed respectively on the inner surface of the element 3 and the outer surface of the stub axle 2, close to the flange 6; on the other hand, whilst the track 17 is formed on the inner surface of the ring 3 adjacent the track 15, the track 18 is formed on an annular element 20 not forming part of the stub axle 2, but mounted externally of and fitted to this latter, in the specific example with a loose coupling able to ensure a small predetermined radial clearance sufficient to allow, in a known way, and which therefore is not described, adjustment of the clearances between balls 11 and tracks 15, 16, 17, 18 to be effected. In this way it is possible to arrange, within the same external dimensions of the unit 1, a large number of balls 11 between the elements 2, 3 for example by first forming the ring 12 directly on the stub axle 2, then mounting the ring 3 by fitting it axially over the stub axle 2 from the end 5, then forming ring 14 and finally mounting ring 20 onto the stub axle 2 by fitting it axially from the end 5: during assembly and, then, in use, the balls 11 are held in position in an known way by a cage 21.

According to a first characteristic of the invention, the ring or annular element 20 is axially locked on the stub axle 2 after insertion thereon by clamping it against the balls of the ring 14 by means of two or more known cotters 22, which consist of segments of a ring delimited by a conical external lateral surface 23 the narrow end of which faces towards the end 5; these cotters 22 are engaged with their radially inner portions within an annular groove 24 formed externally on the end 5 of the stub axle 2 in a position such that the cotters 22, once engaged in it and, therefore, axially locked on the stub axle 2, can contact the ring 20 to retain this in position against the balls 11, between the outer ring 3 and the groove 24; the cotters 22, which are inserted into the groove 24 from a position radially outwardly thereof after assembly of the element 20, are in turn retained in position within the groove 24 by a retaining ring 25.

The retaining ring 25 is in the specific example defined by a cup-shape element made of sheet metal, which according to the principal characteristic of the invention, is fixed exclusively to the annular element 20. In particular the retaining element 25 is fitted with clearance onto the end 5 with its concavity facing towards the end 4 and in this way its frusto-conical portion 26 cooperates with the lateral conical surface 23 of the cotters 22, radially clamping these into the groove 24 by contact from the outside. Locking of the retaining element 25 onto the annular element 20 is effected by means of a second portion 27 of the retaining ring 25, of greater diameter, which is, for example, swaged over an outer lateral surface of the annular element 20 into an annular recess 30 formed thereon if need be. As usual, the balls 11 are finally protected by known sealing assemblies 31 which are carried by the ring 3 and which cooperate at one end with the stub axle 2 and at the opposite end with the ring 20.

In use, the retaining element 25 not only maintains the cotters 22 engaged in the groove 24, thus maintaining the unit 1 assembled, but furthermore ensures an angular frictional connection between the cotters 22 and the element 20 on which the element 25 is fixed. With this simple arrangement, therefore, the disadvantage of currently known similar arrangements is completely avoided in that any relative rotation between the cotters 22 and the ring 20 about the axis B is made impossible by the retaining element 25 which thus performs a further function with respect to the known support units according to the above cited UK Patent 1570849. Rapid wear of the elements 20, 22 in use, which is possible in similar support units known in the art, is therefore avoided.

## Claims

1. A support unit for an idle element, in particular a known-driving wheel of a vehicle, of the type comprising first and second coaxially and relatively rotatably mounted support elements; first and second rings of rolling bodies interposed between the said first and second support elements; a pair of opposed first annular tracks in angular contact with the said first ring of rolling bodies and formed, respectively, externally on the first support element and internally on the second support element; an annular element fitted over the first support element; a pair of opposed second annular tracks in angular contact with the said second ring of rolling bodies and respectively formed externally on the said annular element and internally on the second support element; respective cotters engaged in an annular groove formed externally on the first support element and engaged by the said annular element to retain it in cooperation with the said second ring of rolling bodies; and a retaining ring adapted to retain the cotters engaged in the said annular groove of the first support element; characterised by the fact that the said retaining ring is fixed exclusively to the said annular element.

2.  A support unit according to Claim 1, characterised by the fact that the said first and second support elements respectively comprise a radially inner stub axle provided at a first end with first attachment means, and a radially outer ring provided at a second end opposite the first with second attachment means; the said first annular tracks being formed nearer the said first end of the stub axle, axially offset from one another in such a way that the radial contact axes between the first tracks and the rolling bodies of the said first ring are inclined towards the stub axle axis and converge towards the said first end of the stub axle; the said second tracks being formed nearer the second end of the stub axle, opposite the first end, which projects through the outer ring, and axially offset from one another in such a way that the radial contact axes between the second tracks and the rolling bodies of the said second ring are inclined towards the stub axle axis and converge towards the second end of the stub axle.

3.  A support unit according to Claim 2, characterised by the fact that the said annular element and the said annular groove are disposed on the said second end of the said stub axle, the said cotters axially locking the annular element between the outer ring and the annular groove and being radially outwardly delimited by a conical lateral surface the narrow end of which faces towards the second end of the stub axle.

4.  A support unit according to Claim 3, characterised by the fact that the said retaining ring is defined by a sheet metal cup-shape element which is mounted, with a clearance fit, on the said second end of the stub axle with its open end facing towards the first end thereof in such a way as to cooperatively engage the said conical lateral surface of the cotters with a first frusto-conical portion which clamps the cotters radially into the said annular groove from the outside.

5.  A support unit according Claim 4, characterised by the fact that a second, greater diameter portion of the said retaining ring is swaged over an outer lateral surface of the said annular element in correspondence with an annular recess formed thereon.

Fig.1

Fig.2

EP 0 501 506 A2